# EUROPEAN PATENT SPECIFICATION

(11) **EP 4 232 636 B1**
(45) Date of publication and mention of the grant of the patent: **09.12.2026**
(21) Application number: 21794659.9
(22) Date of filing: 20.10.2021
(51) Int. Cl.: E02D 27/42, B63B 21/00, B63B 35/44, E02D 27/50, F03D 13/20

(54) **WIND TURBINE OFFSHORE SUPPORT STRUCTURE**
OFF SHORE GRÜNDUNG EINER WINDENERGIEANLAGE
FONDATION OFF SHORE D'UN ÉOLIEN

(30) Priority: 20.10.2020 NL 2026717
(43) Date of publication of application: 30.08.2023
(73) Proprietor: GustoMSC B.V., 3115 JD Schiedam (NL)
(72) Inventor: KANT, Robbert, 3115 JD Schiedam (NL)
(74) Representative: V.O.
(86) International application number: PCT/NL2021/050638
(87) International publication number: WO 2022/086329

(56) References cited:
- EP-A2- 2 271 547
- WO-A1-2020/209605
- US-A1- 2020 269 960

## Description

The invention relates to a wind turbine offshore support structure, in particular to a semi-submersible offshore support structure for a wind turbine.

In view of the demand for green energy, the supply of green energy by offshore wind turbines is increasing. Many offshore wind turbines or wind turbine farms are positioned in near shore or relative shallow water areas. At these offshore locations, the wind turbines are typically installed on fixed platforms or structures. However, there is a quest for harvesting wind power at deeper water. At these deeper water locations, a fixed support structure for the wind turbines is not feasible anymore against reasonable costs, so a floating support system for the wind turbine is needed. Many configurations of floating offshore support systems for wind turbine installations have been designed and tested.

Various types of floating offshore support systems for a wind turbine are known, they can roughly be categorized in the following four main categories. Firstly, there are semi-submersible or column stabilized units, secondly there are tension leg platforms, thirdly spar buoys are known as well, and fourthly, also barge type floating installations have been designed.

In the category of semi-submersible offshore floating support structures, the design is often of a triangular shape. Typically, three semi-submersible columns are provided that are interconnected, designed as a steel structure or a concrete structure. The wind turbine is positioned in the center of the triangle or is positioned on one of the columns in vertical alignment with the said column. Often these configurations suffer from a high steel weight and/or a rather deep harbor draft and/or a high center of gravity position and/or a rather high sensitivity to fatigue. Some configurations require an active ballasting system to reduce unfavorable tilt angles.

There remains a need for a floating offshore support structure for a wind turbine that alleviates at least one of the above mentioned drawbacks.

Thereto, the invention provides for a floating offshore support structure according to claim 1.

Publication WO 2021/1219787A1, under Art. 54(3) EPC, discloses a semi-submersible platform comprising an underwater hull made up of two elongated pontoons, where one (second) pontoon (12) is arranged perpendicular to the other (first) pontoon (11), resulting in a submersible underwater hull where the two pontoons in the horizontal plane resemble the letter "T" with one stabilizing column arranged close to each of the three ends of the "T". The two pontoons have substantially four-sided cross-sections and are each arranged with two sides, a bottom and a deck.

In claim 1, it has been excluded that the support structure comprises such a submersible underwater hull as disclosed in WO 2021/1219787A1. EP2271547 A2 discloses a prior art semi-submersible offshore support structure with three semi-submersible columns.

By providing an offshore support structure having semi-submersible columns connected by a connection structure, and a wind turbine receiving element that is positioned at a side of the structure, between two adjacent semi-submersible columns, less counter-ballast is needed, making a smaller, lighter and more economical structure possible than in conventional support structures in which the wind turbine is positioned on one of the columns. Also, a lower harbor draft can be obtained by positioning the wind turbine receiving element in between two semi-submersible columns, thus less or no additional temporary buoyancy devices are required in harbor. The wind turbine tower can be placed on or to the wind turbine receiving element, between the two adjacent semi-submersible columns, these two columns can carry the weight of the wind turbine. This may result in better weight distribution, a lower harbor draft and/or a smaller, lighter more economical structure. The semi-submersible columns may also be denoted as stabilizing columns. The semi-submersible columns or stabilizing columns have a ballast capacity, while the wind turbine receiving element does not have a ballast capacity. The connection structure connects two adjacent semi-submersible columns, thus forming the outer sides of the support structure, in a triangular support structure. The wind turbine receiving element is positioned to the connection structure, thus on one of the outer sides of the support structure. The support structure comprises the semi-submersible columns and the connection structure connecting the semi-submersible columns. The outer sides of the support structure can be formed by the connection structure. The support structure may additionally comprise further structure, such as a central structure, or a T-shaped configuration structure etc.

Advantageously, the wind turbine receiving element is positioned in the middle between two semi-submersible columns that are connected by the connection structure, on an outer side of the support structure. The connection structure forming the connection between adjacent semi-submersible columns, and thus forming outer sides of the support structure, is provided with the wind turbine receiving element. In particular, the wind turbine receiving element is mounted to the connection structure centrally between two adjacent columns. As such, the wind turbine receiving element is mounted to one of the outer sides of the triangular support structure. The connection structure is provided with the wind turbine receiving element, thus the wind turbine receiving element forms part of the connection structure. The wind turbine receiving element can be mounted to the connection structure, so, being mounted to one of the outer sides of the support structure. For example, the wind turbine receiving element can be integrated to the connection structure. For example, the connection structure forming one of the outer sides connecting two semi-submersible columns, can be interrupted into two parts allowing the wind turbine receiving element in between, thus, the wind turbine receiving element forming an integral part of the connection structure.

The semi-submersible columns are positioned in a triangular configuration, wherein each column provides for a corner of the triangular configuration. Between the columns, a connection structure is provided. The connection structure is arranged such that it defines the three sides of the support structure, each side connecting two adjacent semi-submersible columns. The wind turbine receiving element is positioned on one of these sides. By providing the wind turbine receiving element at one of the sides of the support structure, the wind turbine tower can be installed to the wind turbine receiving element in the harbor, using an available harbor crane, fixed or floating, possibly along the quayside. No crane with an extended reach is required to position the wind turbine onto the support structure, as the wind turbine is on the side of the support structure. This may allow for more easy and more cost effective installation of the wind turbine onto the support structure. The semi-submersible columns can be of a tubular shape, or can be of polygonal shape.

Advantageously, the wind turbine receiving element is positioned in the middle in between two adjacent columns, requiring less water ballast for level trim, and therefore beneficial for the overall size of the support structure and for a - smaller - harbor draft. Also, by positioning the wind turbine receiving element in the middle, installing the wind turbine onto the wind turbine receiving element can be done relatively simple with a harbor crane, when the side of the support structure with the wind turbine receiving element is facing the crane location, possibly on the quayside.

Advantageously, the connection structure between the semi-submersible columns is provided by a truss structure. By providing a truss structure, wherein the loads are transferred by braces of the truss structure, a lower total steel weight of the support structure can be obtained compared to a support structure without a truss structure. Also, by providing a truss structure, a lower fatigue sensitivity may be obtained compared to non-truss structure designs, such as flat plated constructions. The truss structure provides for a more rigid connection between the columns and the wind turbine receiving element, thereby less sensitivity to deformation and/or fatigue is obtained.

Advantageously, the truss structure comprises upper braces and lower braces, connecting adjacent columns, wherein the upper braces connect upper ends of the columns, and wherein the lower braces connect lower ends of the adjacent columns. The truss structure typically comprises multiple truss members, also known as braces or beams or chords. Many terms for a truss member are known, in the context of this application the wording 'brace' will be used.

The braces can be tubular shaped or polygonal shaped. The truss structure further may comprise upper braces and lower braces that connect the upper end of the wind turbine receiving element with an upper end of a column and that connect the lower end of the wind turbine receiving element with a lower end of a column respectively. As such, the upper and lower braces are approximately parallel, and, are oriented approximately in a horizontal or lying orientation. The upper braces are, after installation, typically positioned above the water line, and the lower braces are, after installation, typically positioned below the water line and are thus submerged. By providing the truss structure with upper braces and lower braces, connecting the upper ends and connecting the lower ends of the columns and/or the wind turbine receiving element respectively, the columns, and/or the wind turbine receiving element, are supported in an optimal manner by horizontal braces having a maximized spacing in a direction along the height of the columns. The braces can thus transfer loading moments from the wind turbine in an optimized manner to the columns.

Advantageously, the upper braces and/or the lower braces of the truss structure are arranged in a T-shaped configuration. As such, the wind turbine receiving element can be said to positioned in between arms of the "T". The "T" shape typically having two short arms, and one long arm. The wind turbine receiving element is connected via upper and lower braces to its two adjacent semi-submersible columns. These upper and lower braces form one side of the connection structure. Further, the wind turbine receiving element is via an upper brace and/or via a lower brace connected to an opposite column, being the third semi-submersible column of the support structure, not being arranged at the same side on which wind turbine receiving element is arranged. This brace can be said to be forming the long arm of the "T". The upper braces and/or lower braces, forming the short arms of the "T", connecting the wind turbine receiving element act together in taking up the loads, due to this cooperation these braces can for example be lighter than the brace connecting the wind turbine receiving element with the opposite semi-submersible column. Typically, one of the braces forming the short arm can be loaded on pressure, while the other one of the braces forming the short arm may be loaded on pulling. As such, these braces arranged in a T-shaped configuration can optimally support the wind turbine. The truss structure may further comprise oblique braces, the oblique braces may connect a lower end of a column or the wind turbine receiving element to an upper end of a column or the wind turbine receiving element. An oblique brace may also be connected between an upper or lower end of a column and a respective lower brace or upper brace. The oblique braces may typically be arranged upwardly, but other orientation of oblique braces may be possible as well. The oblique brace may be embodied as diagonal brace, but other embodiments of an oblique brace may be possible as well.

Further, the offshore support structure advantageously is provided with a passive ballast system. Since the wind turbine is positioned in between two columns, instead of, as in the prior art configurations, in vertical alignment with one column, only limited counter-ballast may be required, thereby the support structure may be lighter and/or smaller. The support structure may thus require a relatively low amount of water ballast for level trim, as the buoyancy of these two adjacent columns can carry the weight of the wind turbine mounted to the wind turbine receiving element that is positioned in between the two adjacent columns. Because of the relatively low amount of ballast requirement for level trim, a low harbor draft can be obtained, and no or limited additional temporary buoyancy devices are required, e.g. in harbor. A passive ballast system may suffice, and a complex active ballast system may be omitted for reducing costs. Also due to the passive ballast system, the fabrication costs can be relatively low. Advantageously, the support structure is provided with a passive ballast system only, however, when required, an active ballast system may of course be added.

Advantageously, the wind turbine receiving element is an elongated structure extending over a height of the side of the support structure. The wind turbine receiving element can be a tubular structure or can be a polygonal structure. The wind turbine receiving element may extend between about a lower end of the support structure and an upper end of the support structure. Preferably, a lower end of the wind turbine receiving structure extends to the same level as a lower end of the semi-submersible columns. As such, the wind turbine receiving element does not extend lower than the semi-submersible columns. The wind turbine receiving element advantageously has about the same height as the semi-submersible columns, as such the receiving element may relatively easy be connected to the connection structure. Also, by providing the receiving element is having about the same height as the support structure and/or the columns, the wind turbine receiving element may add to the buoyancy of the support structure as well, thereby contributing to a rather limited draft. The wind turbine receiving element is provided for the support of the wind turbine only, and, unlike the semi-submersible stabilizing columns, it has no ballast capacity.

Advantageously, the wind turbine receiving element is a column, tubular or polygonal, having the same height as the semi-submersible stabilizing columns. Contrary to the semi-submersible columns at the corners of the support structure, the wind turbine receiving element is not provided with a ballast system. The wind turbine receiving element preferably has the same diameter or outer dimensions, as the lower end of the wind turbine tower engaging the wind turbine receiving element. As such, when the wind turbine is installed to the wind turbine receiving element, the wind turbine tower extends in vertical alignment with the wind turbine receiving element.

Preferably, the receiving element is connected to the connection structure that also connects the semi-submersible columns. The wind turbine receiving element can thus be integrated in the connection structure, so manufacturing and costs for manufacturing may be reduced. Preferably, the receiving element is also connected to the truss structure thus being integrally connected to the truss structure. Braces of the truss structure may be provided between the wind turbine receiving element and the adjacent column at one side, and braces may be provided between the wind turbine receiving element and the adjacent column at the other side of the wind turbine receiving element. As such, the wind turbine receiving element is positioned to one side of the support structure, and is integrated to the connection structure connecting the columns of the supporting structure. Further, an upper brace and a lower brace may be provided between the wind turbine receiving element and the opposite stabilizing column. As such, the wind turbine receiving element is supported by three horizontally oriented pairs of upper and lower braces, wherein these pairs of upper and lower braces are arranged in a T-shaped configuration. By supporting the wind turbine receiving element by braces in a T-shaped configuration, optimal support for forces in a horizontal direction is provided.

Additionally and/or alternatively, each of the three columns of the support structure is provided with a damper element at its lower end, preferably, the wind turbine receiving element is provided with a damper element at its lower end. The damper element can be a damper box, a closed box-like structure providing damping, as well as buoyancy. Alternatively, the damper element may comprise damper plates providing damping. Providing damper elements has a positive effect on the motion characteristics of the support structure, and thus reducing fatigue sensitivity. Also, the damper element provides buoyancy, added mass and damping, thus having a beneficial effect on the motion characteristics of the support structure. Advantageously, the dimensions of the damper box are optimized to achieve beneficial heave, roll and pitch periods of the support structure. Also, the diameter of the columns may be optimized in view of more optimal heave, roll and pitch periods of the support structure. The damper element is configured for dampening movement of the column to which it is associated and/or of the wind turbine receiving element to which it is associated. The movement of such column and/or wind turbine receiving element can be induced by wind or wave motions. Preferably, the environmentally induced movement of the support structure is dampened by providing one or more damper elements to one or more columns and/or to the wind turbine receiving element. The environmentally induced movement of the support structure can be induced by wind or waves.

Advantageously, the mooring system is connected to the support structure at the semi-submersible columns, in particular, the upper ends of the semi-submersible columns are provided with a mooring connection for connecting with the mooring system, such as mooring lines. The mooring connection can be provided at a top deck of the columns. By providing the mooring lines connection at a high level, namely at an upper end of the columns, the overturning moment due to the wind turbine loads and mooring loads can be relatively small, thereby reducing the required hydrostatic restoring moment as well. Such limited overturning moment and required hydrostatic moment may reduce the overall dimensions of the support structure allowing a relatively low steel weight and smaller overall dimensions than a conventional support structure. The mooring system is configured to connect the support structure to a seabed. Mooring systems can be provided as chain and/or rope systems, and are, as such, known to the skilled person. The mooring system provides for connection of the support structure to the seabed while allowing, some, movement of the floating support structure.

In an advantageous embodiment, the wind turbine receiving element further comprises a cable guide via which cables can enter into the support structure. The cables typically are electrical cables for transferring the electrical power generated by the wind turbine to e.g. a grid station. By providing the cable guide to the wind turbine receiving element, pulling in the cables can be done relatively efficient. Also an improved hang off arrangement of the cables from the support structure can be obtained, well below the water line, such that the cables may be less exposed to motions and loads. Further, by providing the cable guide at the wind turbine receiving element, the cable can enter the support structure at a larger distance from the mooring lines, with no interference of the mooring system to the cables.

The wind turbine receiving element is arranged for receiving a wind turbine, in an advantageous configuration, the wind turbine receiving element can be provided with engagement elements that are arranged for engaging with a lower end of a wind turbine tower. For example, the engagement elements can be provided as a flange adapted for a bolted connection with a corresponding flange onto the lower end of the wind turbine tower. Alternatively, the engagement elements may be arranged as a receiving space in which a correspondingly shaped lower end of the wind turbine tower can be received, e.g. via a slip connection. The slip connection may provide for associated conically shaped surfaces on the receiving element as well as on the turbine tower. Alternatively, the lower end of the wind turbine tower may be shaped as to fit into the hollow space of the receiving element. Many other variants of mounting the wind turbine tower to the wind turbine may be possible. Advantageously, the wind turbine is mounted to the support structure, to the wind turbine receiving element of the support structure, when the support structure is in the harbor. Then, the support structure with wind turbine can be tugged to the offshore location for installation on location with the mooring system. It is known that, in the harbor, the support structure will have a harbor draft, requiring a certain ballast. In transit, during towing, the support structure will be provided with a transit draft, that can be different from the harbor draft. Finally, when installed, the support structure has an operational draft, requiring some ballast. The operational draft may be different from the harbor draft and/or from the transit draft.

As a further aspect of the disclosure, there is provided a support system comprising a support structure and a mooring system connected to the support system for mooring the support system to the sea bed.

In a further aspect of the disclosure, there is provided a support system comprising a support structure and a wind turbine tower mounted to the wind turbine receiving element of the support structure.

Further, there is provided a method for installing an offshore wind turbine. The method comprises providing a semi-submersible support structure with a wind turbine receiving element at a side of the support structure between two semi-submersible columns of the support structure. When the support structure is manufactured, it is launched in water, preferably the support structure is then brought to a harbor water, or is launched in a harbor water. With the support structure floating in harbor water, preferably near a quay, the wind turbine tower can be mounted onto the wind turbine receiving element of the support structure. When positioning the support structure near a quay, a conventional harbor crane may be used for hoisting the wind turbine onto the wind turbine receiving element. As is known in the art, the wind turbine may be mounted in parts onto the support structure, e.g. first the wind turbine tower may be connected to the wind turbine receiving element, then the nacelle and the blades may be installed, or the wind turbine may be hoisted at once onto the wind turbine receiving element. The support structure with the wind turbine mounted to it, may then be tugged by a tug boat to the offshore location for installation. The support structure being towed to the offshore location may have a fully mounted wind turbine on it, or may have no wind turbine on it, in which situation the wind turbine is installed to the support structure at the offshore location. At the offshore location, the mooring system can be connected to the columns, in particular the mooring lines can be connected to the mooring connection at an upper end of the columns. Also, electrical cables can be pulled in to the support structure, which may be done, in an advantageous manner, via a cable guide on the wind turbine receiving element.

In a further aspect, there is provided for a wind turbine that is configured for mounting to the wind turbine receiving element of the support structure.

Further, there is provided for an offshore wind turbine farm comprising a number of wind turbine support systems having a wind turbine support structure and a wind turbine mounted thereon.

In a further aspect, there is an assembly of a tug boat and a wind turbine support structure, preferably with a wind turbine mounted thereon, for tugging the support structure to the offshore location.

Further advantageous embodiments are represented in the subclaims.

These and other aspects will further be elucidated with reference to the drawing comprising figures of exemplary embodiments. In the drawing shows:
Fig. 1 a perspective view of a support structure;
Fig. 2 a perspective view of a support structure with a wind turbine mounted thereon;
Fig. 3 a front view of a support structure with a wind turbine mounted thereon, in a floating condition.

It is to be noted that the figures are given by way of exemplary examples and are not limiting to the disclosure. The drawings may not be to scale. Corresponding elements are designated with corresponding reference signs.

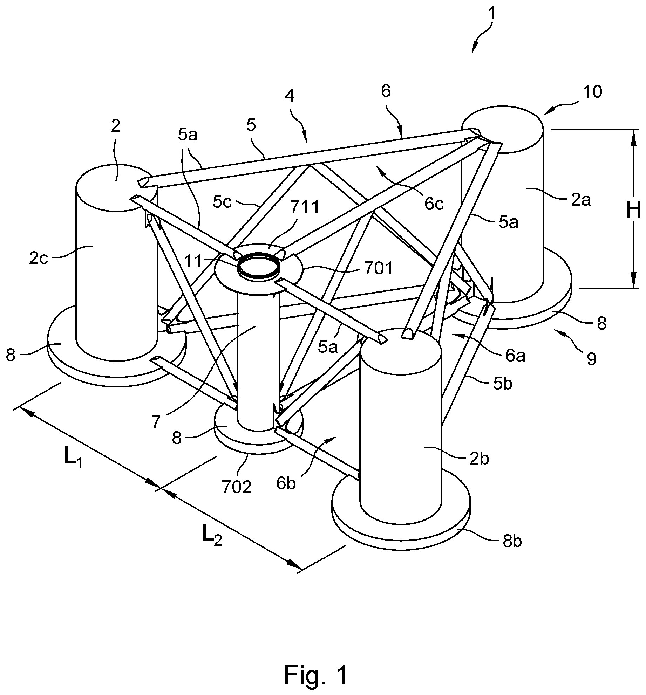

Figure 1 shows a perspective view of a semi-submersible offshore wind turbine support structure 1. The support structure 1 comprises three semi-submersible stabilizing columns 2. Here, the columns are embodied as tubular shaped legs 2, but a polygonal shaped cross-section of such a leg may also be possible. The columns 2 are positioned with respect to each other to form a triangular shaped structure. The columns 2 are connected to each other by means of a connection structure 4, here a truss connection structure 4. The truss structure 4 comprises braces 5 that connect to each other to form the truss structure connecting the columns 2. The connection structure 4 connects two adjacent columns 2, and thus defines a side 6 of the triangular configuration of the structure. Thus, the connection structure 4 defines three sides 6a, 6b, 6c, each between two associated ones of the columns 2a, 2b, 2c, thus forming the outer sides 6a, 6b, 6c of the support structure 1. The three sides 6a, 6b, 6c of the triangular configuration can be equally long, or, alternatively, one of the sides may have a different length. Here, the sides 6a, 6b, 6c form the sides of the triangular shaped configuration, with the columns 2a, 2b, 2c positioned at the corners of the triangular configuration. Here, two of the columns 2a, 2b, 2c are connected to each other by two parallel longitudinally extending braces 5a, 5b, and two oblique braces 5c. The longitudinally extending braces 5a, 5b can be said to be mainly horizontally oriented. Other configurations of the braces 5 forming the truss structure 4 are of course possible. The truss structure 4 is shown schematically in these figures, so the exact connection of a brace or bar to a column may differ in practice. Instead of a truss structure 4 an alternative connection between the columns 2 can be provided as well, e.g. a flat plated structure.

The truss structure 4 comprises upper braces 5a longitudinally extending between upper ends 201a, 201b, 201c, 701 of the columns 2a, 2b, 2c, and of the wind turbine receiving element 7. The truss structure 4 further comprises lower braces 5b connecting lower ends 202a, 202b, 202c, 702 of the columns 2a, 2b, 2c, of the wind turbine receiving element 7. The upper braces 5a and lower braces 5b provide for an optimal support to the columns 2a, 2b, 2c, and to the wind turbine receiving element 7, by connecting to the columns and receiving element at an upper end 201a, 201b, 201c, 701 thereof and at a lower end 202a, 202b, 202c, 702 thereof. As such, the wind turbine receiving element is supported by three upper braces 5a, and three lower braces 5b, both arranged in a T-shaped configuration, with respect to each other. The upper braces 5a and the lower braces 5b connect each of the three columns 2a, 2b, 2c and the wind turbine receiving element 7 with each other. The wind turbine receiving element 7 is mounted to the connection structure, here truss structure 4. In particular, the wind turbine receiving element 7 is positioned in the middle between two adjacent semi-submersible columns 2b, 2c that are connected by the connection structure 4. As such, the wind turbine receiving element 7 forms part of the connection structure 4. The wind turbine receiving element 7 is advantageously integrated to the connection structure 4 connecting two adjacent semi-submersible columns 2b, 2c, in particular in the middle in between the two adjacent semi-submersible columns. The support structure 1 has a triangular shape, with on each corner a semi-submersible column 2a, 2b, 2c and the outer sides of the triangular shape formed by the connection structure 4 connecting the corners, namely the columns, of the triangular shape. On one of the sides of the triangular shape, being an outer side of the support structure 1, the wind turbine receiving element is provided, preferably in the middle of the said side in between the two adjacent semi-submersible columns that are connected by the said side of the support structure. The wind turbine receiving element is mounted to or forms part of the connection structure, defining the outer sides of the triangular shaped support structure, preferably is integrated to the connection structure.

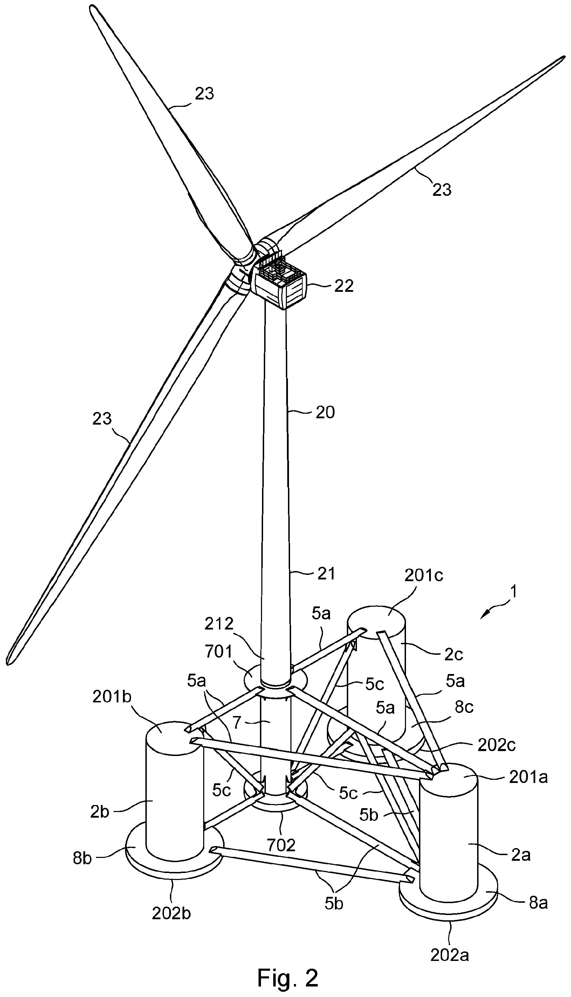

The wind turbine receiving element 7 is connected to its two adjacent columns 2b, 2c respectively via upper braces 5a, and via lower braces 5b. The wind turbine receiving element 7 is also connected to its opposite semi-submersible column 2a via an upper brace 5a and via a lower brace 5b. As such, the wind turbine receiving element 7 is connected via upper braces 5a, and via lower braces 5b each arranged in a T-shaped configuration. Additionally, the columns 2a and 2c are connected via an upper brace 5a and via a lower brace 5b as well. Also, the columns 2a and 2b are connected via an upper brace 5a and via a lower brace 5b as well. Further, between the columns 2c and 2a, and/or between columns 2b and 2a, oblique braces 5c are provided, here two oblique braces 5c are shown, but in another configuration more oblique braces, or only a single oblique brace, or no oblique brace can be possible, as e.g. shown in Figure 2. Between the adjacent column 2c and the wind turbine receiving element 7, there is also an oblique brace 5c provided. Between the adjacent column 2b and the wind turbine receiving element 7, there is also an oblique brace 5c provided. Further, between the wind turbine receiving element 7 and the opposite column 2a, there are, in this example, two oblique braces 5c provided. It is to be understood that the configuration of oblique braces may differ. Advantageously, the upper brace and lower brace connecting the wind turbine receiving element 7 and the opposite column 2a are arranged in a vertical plane, which plane provides for a symmetry plane of the support structure 1.

Further, the truss structure 4 comprises oblique braces 5c that can connect a lower end 702 of the wind turbine receiving element 7 with an upper end 201c of the adjacent column 2c, as well as an oblique brace 5c that can connect a lower end 702 of the wind turbine receiving element 7 with an upper end 201b of the adjacent column 2b. The support structure 1 is arranged to hold and support a wind turbine in harsh offshore conditions. To receive the wind turbine, or at least the wind turbine tower, the support structure 1 is provided with a wind turbine receiving element 7. The wind turbine receiving element 7 is positioned between two of the columns 2a, 2b, 2c. In particular, the wind turbine receiving element 7 is positioned on a side 6 of the support structure 1. Advantageously, the wind turbine receiving element 7 is positioned in the middle between two columns 2b, 2c, to be understood that the distance L1 between the wind turbine receiving element 7 and one connected column 2 is the same as the distance L2 between the wind turbine receiving element 7 and the other connected column 2. The weight of the wind turbine, to be positioned onto the wind turbine receiving element 7, can then be equally distributed over the two adjacent columns 2. The wind turbine receiving element 7 is here embodied as a tubular column as well, but may have also other shapes or configurations. The wind turbine receiving element 7 has approximately the same diameter or outer dimensions as a lower end 212 of the wind turbine tower. There is no further structure provided to enclose the wind turbine receiving element, contrary to the conventional arrangement wherein the wind turbine receiving element is arranged inside a column of the support structure. The wind turbine receiving element 7 is about as high as the stabilizing columns 2a, 2b, 2c and is preferably integrated to the truss structure 4, thereby providing an efficient, effective and a rather low weight, thus less costs, support structure for a wind turbine.

The wind turbine receiving element adds to the buoyancy of the support structure and can be connected by the braces of the truss structure, and, as such, be integrated in the connection structure 4. The wind turbine receiving element 7 is arranged as a column, tubular or polygonal, but does not have ballast capacity, so typically will be smaller in diameter than the semi-submersible columns 2a, 2b, 2c each having ballast capacity. The beneficial positioning of the wind turbine receiving element halfway in between two columns 2, provides for compact overall dimensions, a lower steel weight, a lower fatigue sensitivity, and a lower harbor draft. Also, an active ballast system may be omitted, and a passive ballast system may suffice. However, should one wish to implement an active ballast system, this is possible as well.

All the columns, 2a, 2b, 2c and the wind turbine receiving element 7 are provided with a damper element 8 at a lower end 202a, 202b, 202c. The damper element 8 is here embodied as a damper box 8, a closed, in this example cylindrically shaped box having a diameter that is larger than the diameter of the column to which it is connected. Instead of a damper box, a damper element comprising plates may be provided as well. By providing a damper box 8, the motion characteristics of the support structure 1 can be beneficially influenced. The damper element 8 can dampen the movement of the support structure due to environmentally induced motions such as wind induced motions and/or wave induced motions. Also, the damper boxes 8 can be sized such that movement characteristics such as roll, heave or pitch periods can be optimized. Advantageously, the wind turbine receiving element 7 is provided with a damper box 8 as well, thus adding to the favorable motion characteristics.

The columns 2a, 2b, 2c are each provided with a ballast tank inside the columns. The ballast tanks, not shown in the figures, form part of a passive ballast system of the support structure. The wind turbine receiving element has the same diameter as the wind turbine tower, or at least as the lower part of the wind turbine tower, it does not have a ballast tank. A passive ballast system may suffice because the support structure is sufficiently stable to limit tilt angles and/or due to the advantageous connection of the mooring system at the upper ends of the columns reducing the overturning moment. The damper boxes 8 provide for buoyancy, added mass and damping, thus adding to beneficial motion characteristics of the support structure. Also, a low harbor draft can be achieved, and, additional temporary buoyancy devices can be omitted during the stay of the support structure in the harbor prior to the mounting of the wind turbine on the support structure. Also, very little counter-ballast is needed due to the positioning of the wind turbine receiving element in between two columns 2, and a passive ballast system suffices.

The columns 2 having a height H extending between an upper side 10 of the support structure 1 and a lower side 9 of the support structure 1. The wind turbine receiving element 7 has about the same height H, extending between the lower side 9 of the support structure 1 and the upper side 10 of the support structure 1. As such, the column of the wind turbine receiving element 7 may add to the buoyancy and the motion characteristics of the support structure. The wind turbine receiving element 7 may be provided with engagement elements 11 for engaging to a lower end of a wind turbine tower. The engagement element 11 can be a ring shaped flange for bolted connection with a corresponding ring shaped flange of the wind turbine tower.

In figure 1, it further can be seen that the upper end 701 of the wind turbine receiving element further is provided with an outwardly extending flange 711. The outwardly extending flange 711 typically is provided for connecting the upper braces 5a, and for providing a walking deck.

Figure 2 shows a support structure 1 with a wind turbine 20 is mounted onto the wind turbine receiving element 7. The wind turbine 20 comprises a wind turbine tower 21, a nacelle 22 and blades 23. The weight of this wind turbine 20 is carried by the support structure 1, but, is, in particular distributed over the adjacent columns 2b, 2c, due to the beneficial positioning of the wind turbine receiving element 7 in between the two columns, in particular in the middle of the two columns.

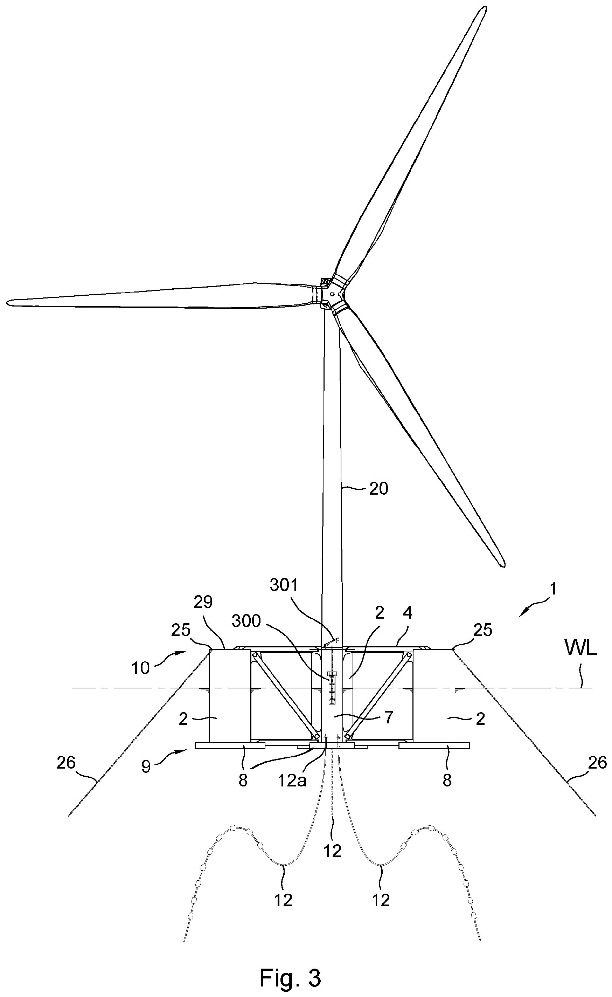

Figure 3 shows a front view of a support system comprising the support structure 1 and the wind turbine 20 mounted to the support structure 1, in particular to the wind turbine receiving element 7. At an upper end of the columns 2, a mooring connection 25 is provided to which a mooring line 26 can be connected. The mooring system 26 typically comprises one or more mooring lines 26 per column, that are at one end connected to the upper end, typically a top deck 29 of the columns 2, and at an other end connected to the sea bottom. The mooring system 26 connects the floating support structure 1 to the sea bottom, while allowing, limited, movement of the support structure 1 due to waves and/or wind. By connecting the mooring lines at the top deck 29 of the columns, the distance between the sea bed and the mooring connection point 25 is increased. For relatively shallow water, between about 40 to about 100 m water depth, a lighter mooring system may be possible. The top deck connection of the mooring lines reduces the stiffness of the mooring system, which may result in lower loads in the mooring lines. Also, by connecting the mooring lines 26 at the top deck 29 of the columns, the overturning moment due to the environmental loads, the wind turbine loads and/or mooring loads is minimized, thereby the overall dimensions of the support system may remain compact. The wind load on the wind turbine causes a load and an overturning moment, but due to the higher connection of the mooring lines, the lever between the wind load and the counteracting load from the mooring system is reduced. The water line level WL is indicatively provided, showing that the support structure 1, when floating, is semi-submersible. Part of the structure 1 is below the water line WL, and part of the structure 1 is above the water line WL. Further, in figure 3, a boat landing 300 mounted to the wind turbine receiving element 7 is shown, as well as a crane 301 provided on the flange 711 of the wind turbine receiving element 7. By providing the boat landing 300 to the wind turbine receiving element 7, the boat landing is farther away from the columns 2, and thus, from the mooring lines 26, which may allow for a safer approach of a vessel to the support structure. Alternatively, the boat landing, and preferably crane, can be provided to one of the columns.

The wind turbine receiving element 7 may further be provided with cable entries 12a for allowing cables 12 to enter the support structure 1. The cable entry 12a can be provided as a cable guide that can at least partly be received inside of the wind turbine receiving element 7. Alternatively, the cable entry 12a may be provided as a cable guide, not shown here, that may be connected at an outside of the receiving element 7. The cable entry at the wind turbine receiving element 7 may provide for an efficient cable, in particular electrical cable, pull-in operation. Also, the hanging-off arrangement of the electric cables 12, once connected, is more efficient as well, as well as less interference with mooring lines 26 may occur.

It will be appreciated that many variants of the first and second cooperating elements are possible. Some of those variants are described above.

For the purpose of clarity and a concise description, features are described herein as part of the same or separate embodiments, however, it will be appreciated that the scope of the claims and disclosure may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art as long as they are comprised within the scope of the invention defined in the following claims.

## Claims

1. Semi-submersible offshore support structure (1) for a wind turbine (20) comprising three semi-submersible columns (2) that are connected to each other by a connection structure (4), wherein the connection structure (4) defines three outer sides (6a, 6b, 6c) of the support structure (1), wherein the semi-submersible columns are positioned in a triangular configuration, wherein each column provides for a corner of the triangular configuration wherein the support structure (1) further comprises a wind turbine receiving element (7) for receiving a wind turbine tower (21), wherein the wind turbine receiving element (7) is positioned on one of the outer sides (6a, 6b, 6c) of the support structure (1) formed by the connection structure (4), in between two semi-submersible columns (2), excluding that the support structure comprises a submersible underwater hull made up of two elongated pontoons, with a first pontoon and a second pontoon connected perpendicularly to the first pontoon at about mid-length of the first pontoon resulting in a submersible underwater hull where the two pontoons in the horizontal plane resemble the letter "T" wherein the two pontoons have substantially four-sided cross-sections and are each arranged with two sides, a bottom and a deck.

2. Semi-submersible offshore support structure according to claim 1, wherein a lower end (702) of the wind turbine receiving element (7) extends to the same level as a lower end (202) of the semi-submersible columns (2b, 2c).

3. Semi-submersible offshore support structure according to claim 1 or 2, wherein the wind turbine receiving element (7) is positioned in the middle in between two semi-submersible columns (2b, 2c).

4. Semi-submersible offshore support structure according to any of the preceding claims, wherein the wind turbine receiving element (7) is integrated to the connection structure (4).

5. Semi-submersible offshore support structure according to any of the preceding claims, wherein the connection structure (4) between the semi-submersible columns (2) is provided by a truss connection structure (4).

6. Semi-submersible offshore support structure according to claim 5, wherein the truss structure (4) comprises upper braces (5a) and lower braces (5b), connecting adjacent columns (2b, 2c), wherein the upper braces (5a) connect upper ends (201) of the columns (2), and wherein the lower braces (5b) connect lower ends (202) of the adjacent columns (2b, 2c).

7. Semi-submersible offshore support structure according to any of the claims 5 - 6, wherein the truss structure (4) further comprises upper braces (5a) and lower braces (5b) that connect the upper end (701) of the wind turbine receiving element (7) with an upper end (201) of a column (2) and that connect the lower end (702) of the wind turbine receiving element (7) with a lower end (202) of a column (2) respectively and/or wherein the truss structure (4) further comprises oblique braces (5c).

8. Semi-submersible offshore support structure according to any of the claims 5 - 7, wherein the upper braces (5a) and/or the lower braces (5b) of the truss structure (4) are arranged in a T-shaped configuration.

9. Semi-submersible offshore support structure according to any of the preceding claims, wherein the columns (2) and/or the wind turbine receiving element (7) at a lower end (702) thereof are provided with a damper element (8) for dampening movement of the associated column (2) or wind turbine receiving element (7) induced by environmental motions such as wave motions or wind motions.

10. Semi-submersible offshore support structure according to any of the preceding claims, wherein an upper end (201) of the semi-submersible columns (2) are provided with a mooring connection (25) for connecting with a mooring system (26), which mooring system (26) is configured to connect the support structure (1) to a seabed and/or wherein the wind turbine receiving element (7) further comprises a cable guide.

11. Semi-submersible offshore support structure according to any of the preceding claims, wherein the wind turbine receiving element (7) has about the same height (H) as the semi-submersible columns (2).

12. Semi-submersible offshore support structure according to any of the preceding claims, wherein the wind turbine receiving element (7) is provided with engagement elements (11) for engaging with a wind turbine tower (21), such as a flange for a bolt connection with the wind turbine tower (21), or a recess in which a lower part of the wind turbine tower (21) is insertable.

13. Semi-submersible offshore support structure according to any of the preceding claims, wherein the semi-submersible columns (2) comprise a passive ballast system.

14. Semi-submersible offshore support system comprising a semi-submersible offshore support structure according to any of the claims 1 - 12 and a wind turbine (20) mounted to the wind turbine receiving element (7) and/or a mooring system (26) connected to the support structure (1).

15. Method for installing an offshore wind turbine (20), the method comprising:
- Providing a semi-submersible offshore support structure (1) according to any of the claims 1 - 13;
- Launching the support structure (1) in a water, typically a harbor water;
- Mounting at least a wind turbine tower (21) of a wind turbine (20) to the wind turbine receiving element (7) of the support structure (1);
- Tugging the support structure (1) with wind turbine tower (21) towards installation location offshore;
- Mooring the support structure (1);
- Connecting electrical cables (12) to the support structure (1) to establish electrical connection.

16. Offshore wind turbine (20) mounted to a wind turbine support structure (1) according to any of the claims 1 - 13.

17. Wind turbine farm comprising a number of wind turbine support systems (1) according to claim 14.

18. Assembly of a tug boat and a wind turbine support structure (1) according to any of the claims 1 - 13, or a wind turbine support system according to claim 14, connected to the tug boat.

## Patentansprüche

1. Halbtauchende Offshore-Tragstruktur (1) für eine Windturbine (20) mit drei halbtauchenden Säulen (2), die durch eine Verbindungsstruktur (4) miteinander verbunden sind, wobei die Verbindungsstruktur (4) drei Außenseiten (6a, 6b, 6c) der Tragstruktur (1) definiert, wobei die halbtauchenden Säulen in einer dreieckigen Konfiguration positioniert sind, wobei jede Säule eine Ecke der dreieckigen Konfiguration bereitstellt, wobei die Tragstruktur (1) ferner ein Windturbinen-Aufnahmeelement (7) zum Aufnehmen eines Windturbinenturms (21) aufweist, wobei das Windturbinen-Aufnahmeelement (7) an einer der durch die Verbindungsstruktur (4) gebildeten Außenseiten (6a, 6b, 6c) der Tragstruktur (1) zwischen zwei halbtauchenden Säulen (2) positioniert ist, wobei ausgeschlossen ist, dass die Tragstruktur einen tauchfähigen Unterwasserrumpf aufweist, der aus zwei länglichen Pontons aufgebaut ist, wobei ein erster Ponton und ein zweiter Ponton etwa auf halber Länge des ersten Pontons senkrecht mit dem ersten Ponton verbunden sind, was zu einem tauchfähigen Unterwasserrumpf führt, bei dem die beiden Pontons in der horizontalen Ebene dem Buchstaben "T" ähneln, wobei die beiden Pontons im Wesentlichen vierseitige Querschnitte aufweisen und jeweils mit zwei Seiten, einem Boden und einem Deck angeordnet sind.

2. Halbtauchende Offshore-Tragstruktur nach Anspruch 1, wobei sich ein unteres Ende (702) des Windturbinen-Aufnahmeelements (7) bis auf die gleiche Höhe wie ein unteres Ende (202) der halbtauchenden Säulen (2b, 2c) erstreckt.

3. Halbtauchende Offshore-Tragstruktur nach Anspruch 1 oder 2, wobei das Windturbinen-Aufnahmeelement (7) mittig zwischen zwei halbtauchenden Säulen (2b, 2c) positioniert ist.

4. Halbtauchende Offshore-Tragstruktur nach einem der vorhergehenden Ansprüche, wobei das Windturbinen-Aufnahmeelement (7) in die Verbindungsstruktur (4) integriert ist.

5. Halbtauchende Offshore-Tragstruktur nach einem der vorhergehenden Ansprüche, wobei die Verbindungsstruktur (4) zwischen den halbtauchenden Säulen (2) durch eine Fachwerk-Verbindungsstruktur (4) bereitgestellt ist.

6. Halbtauchende Offshore-Tragstruktur nach Anspruch 5, wobei die Fachwerkstruktur (4) obere Streben (5a) und untere Streben (5b) aufweist, die benachbarte Säulen (2b, 2c) verbinden, wobei die oberen Streben (5a) obere Enden (201) der Säulen (2) verbinden und wobei die unteren Streben (5b) untere Enden (202) der benachbarten Säulen (2b, 2c) verbinden.

7. Halbtauchende Offshore-Tragstruktur nach einem der Ansprüche 5 - 6, wobei die Fachwerkstruktur (4) ferner obere Streben (5a) und untere Streben (5b) aufweist, die das obere Ende (701) des Windturbinen-Aufnahmeelements (7) mit einem oberen Ende (201) einer Säule (2) bzw. das untere Ende (702) des Windturbinen-Aufnahmeelements (7) mit einem unteren Ende (202) einer Säule (2) verbinden, und/oder wobei die Fachwerkstruktur (4) ferner schräge Streben (5c) aufweist.

8. Halbtauchende Offshore-Tragstruktur nach einem der Ansprüche 5 - 7, wobei die oberen Streben (5a) und/oder die unteren Streben (5b) der Fachwerkstruktur (4) in einer T-förmigen Konfiguration angeordnet sind.

9. Halbtauchende Offshore-Tragstruktur nach einem der vorhergehenden Ansprüche, wobei die Säulen (2) und/oder das Windturbinen-Aufnahmeelement (7) an einem unteren Ende (702) davon mit einem Dämpferelement (8) zum Dämpfen einer Bewegung der zugehörigen Säule (2) oder des zugehörigen Windturbinen-Aufnahmeelements (7), die durch Umgebungsbewegungen wie Wellenbewegungen oder Windbewegungen hervorgerufen wird, versehen sind.

10. Halbtauchende Offshore-Tragstruktur nach einem der vorhergehenden Ansprüche, wobei ein oberes Ende (201) der halbtauchenden Säulen (2) mit einer Verankerungsverbindung (25) zum Verbinden mit einem Verankerungssystem (26) versehen ist, wobei das Verankerungssystem (26) dazu konfiguriert ist, die Tragstruktur (1) mit einem Meeresboden zu verbinden, und/oder wobei das Windturbinen-Aufnahmeelement (7) ferner eine Kabelführung aufweist.

11. Halbtauchende Offshore-Tragstruktur nach einem der vorhergehenden Ansprüche, wobei das Windturbinen-Aufnahmeelement (7) etwa die gleiche Höhe (H) wie die halbtauchenden Säulen (2) aufweist.

12. Halbtauchende Offshore-Tragstruktur nach einem der vorhergehenden Ansprüche, wobei das Windturbinen-Aufnahmeelement (7) mit Eingriffselementen (11) zum Eingreifen mit einem Windturbinenturm (21) versehen ist, wie etwa einem Flansch für eine Schraubverbindung mit dem Windturbinenturm (21) oder einer Aussparung, in die ein unterer Teil des Windturbinenturms (21) einsetzbar ist.

13. Halbtauchende Offshore-Tragstruktur nach einem der vorhergehenden Ansprüche, wobei die halbtauchenden Säulen (2) ein passives Ballastsystem aufweisen.

14. Halbtauchendes Offshore-Tragsystem mit einer halbtauchenden Offshore-Tragstruktur nach einem der Ansprüche 1 - 12 und einer an dem Windturbinen-Aufnahmeelement (7) montierten Windturbine (20) und/oder einem mit der Tragstruktur (1) verbundenen Verankerungssystem (26).

15. Verfahren zum Errichten einer Offshore-Windturbine (20), wobei das Verfahren umfasst:
- Bereitstellen einer halbtauchenden Offshore-Tragstruktur (1) nach einem der Ansprüche 1 - 13;
- Zu-Wasser-Lassen der Tragstruktur (1) in einem Gewässer, typischerweise einem Hafengewässer;
- Montieren zumindest eines Windturbinenturms (21) einer Windturbine (20) an dem Windturbinen-Aufnahmeelement (7) der Tragstruktur (1);
- Schleppen der Tragstruktur (1) mit dem Windturbinenturm (21) zu einem Offshore-Installationsort;
- Verankern der Tragstruktur (1);
- Verbinden elektrischer Kabel (12) mit der Tragstruktur (1), um eine elektrische Verbindung herzustellen.

16. Offshore-Windturbine (20), die an einer Windturbinen-Tragstruktur (1) nach einem der Ansprüche 1 - 13 montiert ist.

17. Windturbinenpark, aufweisend eine Anzahl von Windturbinen-Tragsystemen (1) nach Anspruch 14.

18. Anordnung aus einem Schleppboot und einer Windturbinen-Tragstruktur (1) nach einem der Ansprüche 1 - 13 oder einem Windturbinen-Tragsystem nach Anspruch 14, das mit dem Schleppboot verbunden ist.

## Revendications

1. Structure de support offshore semi-submersible (1) pour une éolienne (20) comprenant trois colonnes semi-submersibles (2) qui sont raccordées entre elles par une structure de raccordement (4), dans laquelle la structure de raccordement (4) définit trois côtés externes (6a, 6b, 6c) de la structure de support (1), dans laquelle les colonnes semi-submersibles sont positionnées dans une configuration triangulaire, dans laquelle chaque colonne fournit un coin de la configuration triangulaire, dans laquelle la structure de support (1) comprend en outre un élément de réception d'éolienne (7) pour recevoir une tour d'éolienne (21), dans laquelle l'élément de réception d'éolienne (7) est positionné sur l'un des côtés externes (6a, 6b, 6c) de la structure de support (1) formée par la structure de raccordement (4), entre deux colonnes semi-submersibles (2), à l'exclusion du fait que la structure de support comprend une coque sous-marine submersible constituée de deux pontons allongés, avec un premier ponton et un deuxième ponton raccordé perpendiculairement au premier ponton environ à mi-longueur du premier ponton, ce qui se traduit par une coque sous-marine submersible où les deux pontons, dans le plan horizontal, ressemblent à la lettre « T », dans laquelle les deux pontons ont des sections transversales sensiblement à quatre côtés et sont chacun agencés avec deux côtés, un fond et un pont.

2. Structure de support offshore semi-submersible selon la revendication 1, dans laquelle une extrémité inférieure (702) de l'élément de réception d'éolienne (7) s'étend au même niveau qu'une extrémité inférieure (202) des colonnes semi-submersibles (2b, 2c).

3. Structure de support offshore semi-submersible selon la revendication 1 ou 2, dans laquelle l'élément de réception d'éolienne (7) est positionné au centre entre deux colonnes semi-submersibles (2b, 2c).

4. Structure de support offshore semi-submersible selon l'une quelconque des revendications précédentes, dans laquelle l'élément de réception d'éolienne (7) est intégré à la structure de raccordement (4).

5. Structure de support offshore semi-submersible selon l'une quelconque des revendications précédentes, dans laquelle la structure de raccordement (4), entre les colonnes semi-submersibles (2), est fournie par une structure de raccordement en treillis (4).

6. Structure de support offshore semi-submersible selon la revendication 5, dans laquelle la structure en treillis (4) comprend des jambes de force supérieures (5a) et des jambes de force inférieures (5b) raccordant les colonnes (2b, 2c) adjacentes, dans laquelle les jambes de force supérieures (5a) raccordent les extrémités supérieures (201) des colonnes (2) et dans laquelle les jambes de force inférieures (5b) raccordent les extrémités inférieures (202) des colonnes (2b, 2c) adjacentes.

7. Structure de support offshore semi-submersible selon l'une quelconque des revendications 5 à 6, dans laquelle la structure en treillis (4) comprend en outre des jambes de force supérieures (5a) et des jambes de force inférieures (5b) qui raccordent l'extrémité supérieure (701) de l'élément de réception d'éolienne (7) avec une extrémité supérieure (201) d'une colonne (2) et qui raccordent l'extrémité inférieure (702) de l'élément de réception d'éolienne (7) avec une extrémité inférieure (202) d'une colonne (2) respectivement et/ou dans laquelle la structure en treillis (4) comprend en outre des jambes de force obliques (5c).

8. Structure de support offshore semi-submersible selon l'une quelconque des revendications 5 à 7, dans laquelle les jambes de force supérieures (5a) et/ou les jambes de force inférieures (5b) de la structure en treillis (4) sont agencées dans une configuration en forme de T.

9. Structure de support offshore semi-submersible selon l'une quelconque des revendications précédentes, dans laquelle les colonnes (2) et/ou l'élément de réception d'éolienne (7), au niveau de leur extrémité inférieure (702) sont (est) prévu(es) avec un élément d'amortissement (8) pour amortir le déplacement de la colonne (2) associée ou de l'élément de réception d'éolienne (7) induit par les mouvements environnementaux comme les mouvements des vagues ou les mouvements du vent.

10. Structure de support offshore semi-submersible selon l'une quelconque des revendications précédentes, dans laquelle une extrémité supérieure (201) des colonnes semi-submersibles (2) est prévue avec un raccordement d'amarrage (25) pour le raccordement avec un système d'amarrage (26), lequel système d'amarrage (26) est configuré pour raccorder la structure de support (1) à un fond marin et/ou dans laquelle l'élément de réception d'éolienne (7) comprend en outre un guide de câble.

11. Structure de support offshore semi-submersible selon l'une quelconque des revendications précédentes, dans laquelle l'élément de réception d'éolienne (7) a à peu près la même hauteur (H) que les colonnes semi-submersibles (2).

12. Structure de support offshore semi-submersible selon l'une quelconque des revendications précédentes, dans laquelle l'élément de réception d'éolienne (7) est prévu avec des éléments de mise en prise (11) destinés à se mettre en prise avec une tour d'éolienne (21), comme une bride pour un raccordement par boulon avec la tour d'éolienne (21) ou un évidement dans lequel une partie inférieure de la tour d'éolienne (21) peut être insérée.

13. Structure de support offshore semi-submersible selon l'une quelconque des revendications précédentes, dans laquelle les colonnes semi-submersibles (2) comprennent un système de ballast passif.

14. Système de support offshore semi-submersible comprenant une structure de support offshore semi-submersible selon l'une quelconque des revendications 1 à 12 et une éolienne (20) montée sur l'élément de réception d'éolienne (7) et/ou un système d'amarrage (26) raccordé à la structure de support (1).

15. Procédé pour installer une éolienne offshore (20), le procédé comprenant les étapes comprenant les faits de :
prévoir une structure de support offshore semi-submersible (1) selon l'une quelconque des revendications 1 à 13 ;
mettre à l'eau la structure de support (1) dans une étendue d'eau, typiquement les eaux d'un port ;
monter au moins une tour d'éolienne (21) d'une éolienne (20) sur l'élément de réception d'éolienne (7) de la structure de support (1) ;
remorquer la structure de support (1), avec la tour d'éolienne (21), jusqu'au site d'installation en mer ;
amarrer la structure de support (1) ;
raccorder les câbles électriques (12) à la structure de support (1) afin d'établir le raccordement électrique.

16. Éolienne offshore (20) montée sur une structure de support d'éolienne (1) selon l'une quelconque des revendications 1 à 13.

17. Parc éolien comprenant un certain nombre de systèmes de support d'éolienne (1) selon la revendication 14.

18. Ensemble constitué d'un remorqueur et d'une structure de support d'éolienne (1) selon l'une quelconque des revendications 1 à 13 ou d'un système de support d'éolienne selon la revendication 14, raccordé au remorqueur.
